# EUROPEAN PATENT APPLICATION

(11) **EP 2 874 438 A1**
(43) Date of publication of application: **20.05.2015**
(21) Application number: 13193301.2
(22) Date of filing: 18.11.2013
(51) Int. Cl.: H04W 40/02, H04W 84/18, H04W 40/20

(54) **Operating a user equipment in a wireless mesh radio network**

(71) Applicant: Sony Corporation, Tokyo 108-0075 (JP)
(72) Inventor: Larsson, Bo, 217 64 Malmö (SE); Agardh, Kåre, 257 32 Rydebäck (SE)
(74) Representative: Banzer, Hans-Jörg

(57) **Abstract**

Method for operating a user equipment (101) in a wireless mesh radio network (100). The wireless mesh radio network (100) comprises at least two nodes (102-104) for routing communication data. The user equipment (101) is configured to communicate directly with each of the at least two nodes (102-104) via a corresponding direct radio communication. According to the method, for each node (102-104) a corresponding movement information which depends on a movement of at least one of the user equipment (101) and the node (102-104) is determined, and based on the movement information one node (104) of the at least two nodes (102-104) is selected. Communication data which is to be routed from the user equipment (101) to a destination (110) is transmitted directly to the selected node (104).

## Description

### Operating a user equipment in a wireless mesh radio network

The present invention relates to a method for operating a user equipment in a wireless mesh radio network, especially to an improved method for routing data traffic through a wireless mesh radio network by using velocity information of the user equipment and nodes of the network.

### BACKGROUND OF THE INVENTION

Devices in a wireless network may be connected in a meshed structure. For example, one device may be connected to one or more other devices in an ad-hoc manner. Each device in a meshed network is called a node and may comprise for example a stationary or a mobile device, for example a user equipment like a mobile phone, a mobile computer, a mobile navigation system, a tablet PC or a personal digital assistant. In a wireless network having a mesh topology each node may not only capture and emit its own data, but may also serve as a relay or router for other nodes. Therefore, the nodes in the network may collaborate to propagate the data in the network. Wireless mesh radio networks may rely on different technologies, for example on wireless local area network (WLAN) technologies defined in several standards of the IEEE 802.11 or on device-to-device communication defined in wireless cellular telecommunication networks, for example 3GPP LTE (3^{rd} Generation Partnership Project, Long Term Evolution).

In wireless mesh radio networks, data traffic needs to find its way from the sending node to the receiving node by travelling through one or more other nodes. Some nodes may provide extra services like a connectivity to the internet, which means that there are multiple ways for a node in the network to send data to another node in the network and to reach devices or destinations in other networks, for example the internet.

Algorithms for finding an optimized way through a mesh network may be based on knowing the location of the nodes and routing the data the geographically shortest way. However, especially in rapidly changing topologies, when wireless nodes are moving, this may lead to a frequent rerouting and route setup, increasing routing complexity and making it difficult to provide an efficient routing scaling acceptably with the size of the mesh network.

Therefore, there is a need for an improved operating of a user equipment or node in wireless mesh radio networks.

### SUMMARY OF THE INVENTION

According to the present invention, this object is achieved by a method for operating a user equipment in a wireless mesh radio network as defined in claim 1, a user equipment for a wireless mesh radio network as defined in claim 7, a node for a wireless mesh radio network as defined in claim 13, and a node for a wireless mesh radio network as defined in claim 14. The dependent claims define preferred and advantageous embodiments of the invention.

According to an aspect of the present invention, a method for operating a user equipment in a wireless mesh radio network is provided. The wireless mesh radio network comprises at least two nodes for routing communication data. The user equipment is configured to communicate directly with each of the at least two nodes via a corresponding direct radio communication. Each node may comprise the functionality of a user equipment and the user equipment may act itself as a node for routing communication data from other user equipments and nodes. The user equipment may comprise for example a mobile device like a mobile telephone, a so-called smartphone, a mobile tablet computer or a mobile personal digital assistant. The direct radio communication between the user equipment and another user equipment or a node may be accomplished for example by radio technologies according to wireless local area network standards, like IEEE 802.11, or according to a device-to-device communication as defined in radio telecommunication networks, for example 3GPP. However, other direct radio communication technologies may be used to facilitate setting up the direct radio communication in the wireless mesh radio network, for example Bluetooth or ZigBee. In the wireless mesh radio network each node may not only receive and send its own data, but also serve as a relay for other nodes and user equipments. Therefore, in wireless mesh radio networks each node may cooperate with other nodes to propagate the data in the network. Typically, a routing technique is used in the wireless mesh radio network for propagating data along a path by hopping from node to node until the destination is reached. According to the method of the present invention, for each node of the at least two nodes a corresponding movement information which depends on a movement of the user equipment and /or the node is determined. For example, the user equipment may determine its relative movement, for example its velocity, with respect to each of the nodes which are in reach to directly communicate with the user equipment. The velocity may comprise e.g. a speed as well as a direction of the user equipment or the node. Based on the determined movement information of each of the at least two nodes, one node of the at least two nodes is selected. Communication data which is to be routed from the user equipment to a destination is transmitted directly via a corresponding direct radio communication to the selected node. In other words, the method uses the movement information as input for the decision where to send data. For example, the user equipment wants to send data either to another device in the same wireless mesh radio network or to another network, for example to the internet. The user equipment is connected to or is at least aware of more than one other user equipment or node that may act as a router towards the final recipient. The user equipment may be for example moving along a certain direction with a certain speed which are both determined by the user equipment. Geographical positions, absolutely or relatively, with respect to the user equipment may also be known. Based on the location and velocity (i.e. speed and direction) the user equipment is travelling and the location of the possible receiving nodes the user equipment decides to send the data to a more suitable node. Possibly, a handover to the more suitable node may be needed. The node may act as a relay for forwarding the data to the next node or the node may comprise for example an access point or a base station forwarding the data to another network. Considering the movement information of the user equipment may enable to achieve a better data throughput and may avoid handover during the transmissions.

According to an embodiment, the corresponding movement information may be determined by determining a position and velocity of the user equipment. In combination with determining a position of the node, the movement information may be determined. The position and velocity of the user equipment may be determined for example by sensors of the user equipment such as a compass, an acceleration sensor, a gyrometer, and a receiver for receiving signals of a global navigation satellite system, e.g. the global positioning system GPS. These sensors may be available in the user equipment, or connected thereto, for relative location and navigation purposes. The sensors may indicate the geographical bearing and speed, i.e. the velocity, when the user equipment is moving. Location or position information of each of the at least two nodes may be received via a device-to-device communication between the user equipment and the corresponding node. Therefore, the movement information may be reliably determined at low cost as the corresponding hardware may already be provided at the user equipment.

According to another embodiment, the corresponding movement information for each node may be determined by determining a relative velocity between the user equipment and the node. For example, a series of signal strengths of radio signals transmitted between the user equipment and the node are measured and the relative velocity between the user equipment and the node is determined based on the series of signal strengths. Based on the relative velocity between the user equipment and the node, the user equipment can conclude which nodes are not suitable to send the data to, for example those nodes which are moving speedily away.

According to another embodiment, the movement information relating to the user equipment and one of the nodes may be determined by determining a position and velocity of both the user equipment and the node. The position and velocity of the node may be determined, for example, by sensors of the node such as a compass, an acceleration sensor, a gyrometer, and a receiver for receiving signals of a global navigation satellite system, e.g. the global positioning system GPS.

According to another embodiment, the movement information concerning each node is determined by determining a predicted motion path of the user equipment and determining the movement information based on the predicted motion path of the user equipment. For example, when a user of the user equipment is travelling from a current position to a destination, this travelling may be planned and supported by a navigation system which may be comprised in the user equipment. The route planned by the navigation system may guide the user together with the user equipment along streets or walkways to reach the destination. Based on this planned route the predicted motion path of the user equipment may be determined and may be used to determine the movement information defining the movement between the user equipment and each of the nodes.

Furthermore, the predicted motion path of each of the nodes may be determined, for example based on the planned travelling route of the node as described above in connection with the user equipment. The predicted motion path for each node may be used to determine the movement information defining the movement between the user equipment and the corresponding node. Therefore, constraint parameters for a movement of the user equipment or the node can be considered. The constraint parameters may be derived as described above from maps or may be derived from other contexts around expected motion paths, for example the user equipment or the node may stay on roads and may not pass physical barriers like buildings or rivers. Furthermore, the predicted motion paths for the user equipment and the nodes may be combined with information determined by sensors of the mobile device, like position and velocity.

According to another aspect of the present invention, a user equipment for a wireless mesh radio network is provided. The wireless mesh radio network comprises at least two nodes for routing communication data. The user equipment comprises a wireless radio interface and a processing device. The wireless radio interface is configured to communicate wirelessly with the at least two nodes of the wireless mesh radio network via corresponding direct radio communications. A direct radio communication in this context means that the user equipment is for example emitting a radio signal via an antenna and this radio signal is directly received by an antenna of the node. In other words, the radio signal is not relayed by any other electronic device arranged in the signal path between the user equipment and the node. However, for setting up a data transmission from the user equipment to a destination device, the communication path may be routed along a plurality of nodes each forwarding the communication data via direct radio communication links. The processing device is configured to determine for each node of the at least two nodes a corresponding movement information which depends on a movement of the user equipment and/or the node, e.g. a relative movement between the user equipment and the node. For example, for each node the processing device determines how the node is moving with reference to the user equipment, for example if the node is departing, approaching or staying in the same distance. Based on the determined movement information of each of the at least two nodes, one of the nodes is selected and communication data to be routed from the user equipment to the destination is transmitted directly via the direct radio communication to the selected node. For example, when a node is detected which is moving along the same direction as the user equipment and is configured to forward communication data to the destination, this node may be preferably selected for being the first hop for routing the communication data to the destination.

According to an embodiment, the user equipment comprises furthermore a sensor device configured to determine a position and velocity of the user equipment. The sensor may comprise for example an acceleration sensor, a compass or a gyrometer, or the sensor may comprise a receiver for receiving radio signals from a global navigation satellite system for determining a global position of the user equipment based on the received radio signals. The processing unit is configured to receive from each node within a direct radio communication range a corresponding position information relating to a position of the corresponding node. Based on the position and velocity of the user equipment and based on the position of one of the nodes, the processing device determines the movement information defining, for example the relative movement between the user equipment and the corresponding node. Additionally or as an alternative, the processing device may be configured to determine for each node a relative velocity between the user equipment and the node, for example by measuring a series of signal strengths of radio signals transmitted between the user equipment and the node and by determining for each node the relative velocity between the user equipment and the node based on the series of signal strengths. For example, when the series of signal strengths comprise three measurements, a decrease or an increase of the signal strength from the first measurement to the second measurement and to the third measurement may be used to determine if the user equipment and the node are departing from each other, approaching each other or stay at in general the same distance.

According to a further embodiment, the processing device receives from each node the position and velocity of the corresponding node. The position and velocity may be determined, for example, by sensors of the node such as a compass, an acceleration sensor, a gyrometer, and a receiver for receiving signals of a global navigation satellite system, e.g. the global positioning system GPS. Based on the position and velocities of the node and user equipment respectively, the processing device of determines the movement information.

According to another embodiment, the processing device is configured to determine a predicted motion path of the user equipment and to determine the movement information based on the predicted motion path of the user equipment. The predicted motion path may be derived by a navigation functionality provided at the user equipment calculating a route from the current position of the user equipment to a user-defined destination. The predicted motion path may indicate at what time the user equipment will be at which place. This information may be combined with location information of each of the nodes in an environment of the user equipment for determining for example the relative movement between the user equipment and each of the nodes.

According to a further embodiment, the processing device receives from each node a predicted motion path of the corresponding node. The predicted motion path may be determined by a navigation function of the node defining a route along which the node will presumably move in the future. Based on the predicted motion path of the node and its own movement, the processing device of the user equipment determines the movement information which depends on the relative movement between the user equipment and the corresponding node. The movement information enables the user equipment to select one of the nodes as the next hop for transmitting communication data to be routed from the user equipment to the destination such that a better throughput in the wireless mesh radio network can be achieved and handovers in the middle of data communications may be minimized.

According to another aspect of the present invention, a node for a wireless mesh radio network is provided. The wireless mesh radio network comprises a plurality of other nodes for routing communication data. At least one of the other nodes comprises a user equipment. The node comprises a wireless radio interface for communicating wirelessly with the user equipment via a direct radio communication, and a processing device. The processing device is configured to determine a position information relating to a position of the node and to transmit the position information to the user equipment via the direct radio communication. Therefore, the node may cooperate with the above-described user equipment to determine the movement information in the user equipment and thus to contribute to increase the throughput of the mesh radio network and to decrease the number of handovers. The handover in this context means for example that a user equipment has selected a first node for a direct communication for transmitting communication data to a destination and during the transmission of the communication data the direct radio communication to the first node deteriorates such that the user equipment has to abort the direct communication to the first node and set up a direct communication to a second node for continuing or restarting the transmission of the communication data. Such a handover from the first node to the second node may be accompanied by data losses or retransmissions and may increase traffic load in the wireless mesh radio network.

According to another aspect of the present invention, a node for a wireless mesh radio network is provided. The wireless mesh radio network comprises a plurality of other nodes for routing communication data. At least one of the other nodes comprises a user equipment. The node comprises a wireless radio interface for communicating wirelessly with the user equipment via a direct radio communication, and a processing device. The processing device is configured to determine a position and velocity information relating to the node and to transmit the position and velocity information to the user equipment via the direct radio communication.

According to another aspect of the present invention, a node for a wireless mesh radio network is provided. The wireless mesh radio network comprises a plurality of nodes for routing communication data. At least one of the other nodes comprises a user equipment. The node comprises a wireless radio interface for communicating wirelessly with the user equipment via a direct radio communication. The node comprises furthermore a processing device which is configured to determine a predicted motion path of the node and to transmit the predicted motion path of the node to the user equipment via the direct radio communication. The motion path may be predicted by a navigation application of the node planning a motion path of the node from a current position of the node to a destination location. Furthermore, the motion path may be predicted based on constraint parameters from maps or other information of the environment of the node, relating for example to physical barriers in the environment of the node. By transmitting the predicted motion path of the node to the user equipment, the user equipment may determine the relative motion information relating to the motion between the user equipment and the node, and the user equipment may use this relative motion information for selecting an appropriate node as a next hop for transmitting communication data.

Although specific features described in the above summary and the following detailed description are described in connection with specific embodiments and aspects of the present invention, it should be understood that the features of the embodiment and aspects may be combined with each other unless specifically noted otherwise. Especially, the above-described user equipment and the above-described nodes may be combined within a single device which may serve in the wireless mesh radio network at the same time as a terminal device for a user and a routing device supporting the routing of the wireless mesh radio network.

### BRIEF DESCRIPTION OF THE DRAWINGS

The present invention will now be described in more detail with reference to the accompanying drawings.
Fig. 1 shows a wireless mesh radio network comprising a plurality of user equipments and nodes according to embodiments of the present invention.
Fig. 2 shows a user equipment according to an embodiment of the present invention in more detail.
Fig. 3 shows a flowchart comprising method steps according to an embodiment of the present invention.

### DETAILED DESCRIPTION OF PREFERRED EMBODIMENTS

In the following, exemplary embodiments of the invention will be described in more detail. It is to be understood that the features of the various exemplary embodiments described herein may be combined with each other unless specifically noted otherwise. Same reference signs in the various drawings refer to similar or identical components. Any coupling between components or devices shown in the figures may be a direct or indirect coupling unless specifically noted otherwise.

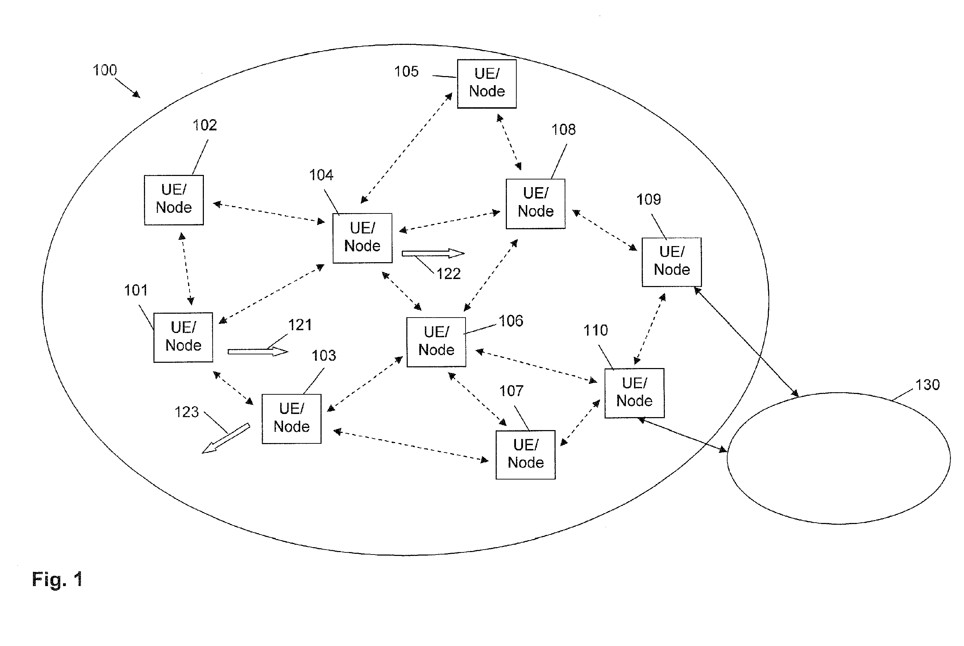

Fig. 1 shows schematically an exemplary wireless mesh radio network 100. The mesh network 100 comprises a plurality of nodes 101-110. Each node may comprise for example a terminal device, a so-called user equipment (UE), like a mobile phone, a mobile computer, a tablet PC or a personal digital assistant PDA. Each node 101-110 comprises a radio interface for communicating within the range of the radio communication with neighboring nodes. In Fig. 1 each direct communication between two nodes via a direct radio communication is indicated by a dashed arrow. As an example, node 101 may directly communicate via corresponding radio links with nodes 102, 103 and 104. As another example, node 106 may directly communicate via corresponding direct radio links with nodes 103, 104, 107, 108 and 110. The nodes 101-110 may be mobile devices which may move around geographically, for example when the device is carried around by a user using the device. Therefore, direct radio links between two nodes are not permanent, but may vary with the position of the nodes. For example, when node 101 is located near node 109, the direct radio link between nodes 101 and 102 will not be established anymore, but there will be a new direct radio link between nodes 101 and 109. Some nodes of the wireless mesh radio network 100 may be coupled via a wireless or wired connection to other networks 130, for example the internet. In Fig. 1 the nodes 109 and 110 are coupled to the network 101 as indicated by the solid arrows.

A node of the wireless mesh radio network 100, for example node 101, may be required to transmit communication data between the node 101 and another node in the wireless mesh radio network or another device in the network 130. Communication data between the node 101 and the corresponding recipient (for example node 109 or a device in the network 130) has to be routed along the radio links between the nodes until the recipient is reached. For example, data communication transmitted from the node 101 may be routed via nodes 102, 104, 108 and 109 to the network 130. As can be seen, in the wireless mesh radio network 100 each node must not only receive and transmit its own data, but also serve as a relay or router for other nodes. In typical routing techniques, data packets or messages are propagated along a path by hopping from node to node until the destination is reached. In wireless mesh radio networks comprising mobile nodes direct radio links between certain nodes may become available or become unavailable when the nodes are moving. Therefore, the routing in the wireless mesh radio network 100 has to be adapted permanently to the current structure or arrangement of the nodes. Wireless mesh radio networks supporting mobile devices are also called mobile ad-hoc networks (MANET). Each node in a mobile ad-hoc network is free to move independently in any direction and will therefore change its radio links to other nodes frequently. However, each node must forward traffic unrelated to its own use and is therefore a router. The direct radio link between two nodes may be established for example according to wireless local area standards, for example according to IEEE 802.11, or may be established via a so-called device-to-device communication provided by mobile cellular communication standards like 3GPP.

Assuming the case the user equipment 101 wants to set up a data communication to user equipment 110. In this case, user equipment 101 may decide to send communication data to node 103 as node 103 is located closer to node 101 than the other reachable nodes 102 and 104. Therefore, a communication between nodes 101 and 110 may be established via a routing along nodes 103 and 106. However, the nodes in the wireless mesh radio network 100 may be moving. For example, user equipment 101 may be moving in the direction indicated by arrow 121, node 104 may be moving in the direction of arrow 122 and node 103 may be moving in the direction of arrow 123. Therefore, when the nodes 101, 104 and 103 are moving, the radio link between nodes 101 and 103 may break down during data transmission between node 101 and node 110 and a new transmission path has to be established.

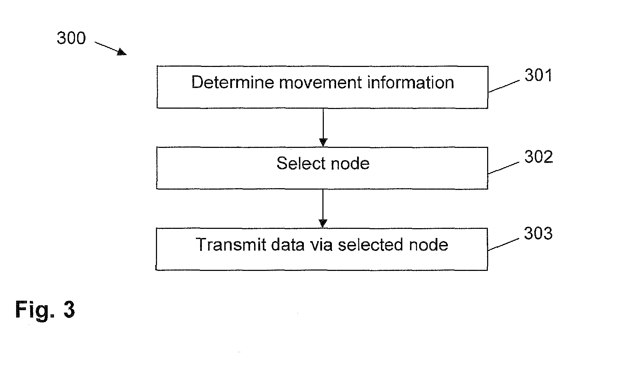

Therefore, as shown schematically in the flowchart of Fig. 3, node 101 determines a relative movement information for each node 102, 103 and 104 to which a direct radio communication is currently established (step 301). Based on this relative movement information the user equipment 101 determines a node which is suited best for a data communication with node 110 with respect to a reliable connection, a high data throughput and a handover avoidance. Based on the relative movement information, user equipment 101 may determine that the node 103, although being the nearest, is moving away, whereas node 104, although being furthest away, is moving along with node 101 to the destination of the communication data. Therefore, user equipment 101 may select node 104 as a next hop for the data transmission in step 302 and establishes a data transmission to the node 110 via node 104 in step 303. Due to the same moving direction of nodes 101 and 104, a handover or rerouting may be avoided at least until node 104 passes node 106 and leaves the range for the direct radio communication between nodes 104 and 106.

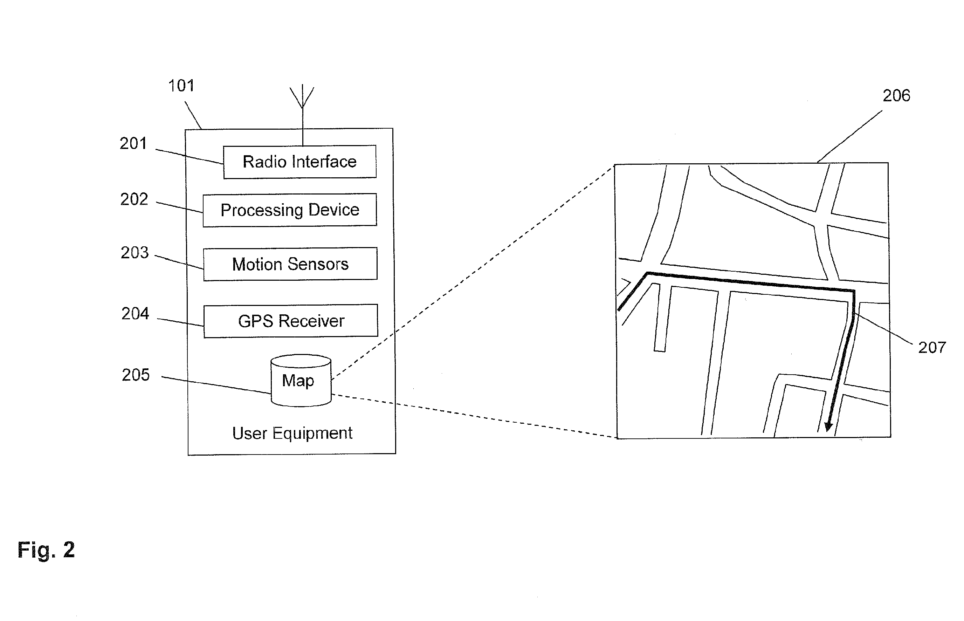

The relative motion information used for selecting a node for transmitting communication data, may be determined in different ways as will be explained in the following with reference to Fig. 2. Fig. 2 shows schematically the structure of the user equipment 101. The user equipment 101 comprises a radio interface 201 coupled to an antenna of the user equipment 101. The user equipment 101 comprises furthermore a processing device 202, for example a microprocessor or a controller. Furthermore, the user equipment 101 comprises motion sensors 203, for example a compass, an acceleration sensor and/or a gyrometer. Furthermore, the user equipment 101 comprises a GPS receiver 204 for receiving signals from a global navigation satellite system. Based on a position of the user equipment 101 determined by the GPS receiver 204 and information from the compass and the acceleration sensor, a location and velocity of the user equipment 101 can be determined. Additionally, the velocity may also be determined using the GPS receiver 204. Other user equipments, for example the user equipment 104 in Fig. 1, may comprise a similar structure and are therefore also configured to determine their position and velocity. This information may be exchanged between the nodes via the direct radio communication indicated by the dashed arrows in Fig. 1. Therefore, geographical positions and velocity of nearby nodes are known to user equipment 101. Based on this information, the user equipment 101 may select the most appropriate node, for example node 104, to establish a data communication.

Additionally or as an alternative, the relative motion information between two nodes, for example the nodes 101 and 104, may be determined based on signal strength measurements. User equipment 101 may perform a series of signal strength measurements of a communication between the user equipment 101 and node 104 to determine if node 104 is departing from the user equipment 101, is approaching the user equipment 101, or is staying at a same distance to the user equipment 101. The same signal strength measurements may be performed with respect to nodes 102 and 103 to determine their relative movements with respect to user equipment 101. On the basis of this information, user equipment 101 can conclude which nodes are not suitable to send communication data to. In the exemplary scenario in Fig. 1 the nodes 103 and 102 may depart from node 101, whereas node 104 may stay in the same distance or may be even approached by node 101.

In case the wireless mesh radio network 100 is a so-called location-based mesh network where geographical position is known for all neighboring nodes, the user equipment 101 may also use its own position and velocity vector to find the best node to send data to from that aspect, for example to a node moving along the same direction as the final receiving node.

As shown in Fig. 2, the user equipment 101 may additionally comprise a map database 205 which may be used by the processing device 202 to calculate a travelling route from a current position of the user equipment 101 to a destination location defined by a user of the user equipment 101. A portion 206 of the map is shown in Fig. 2 along with a planned travelling route 207. Based on the planned travelling route 207 an expected motion path of the user equipment 101 can be combined with location or motion information of other nodes 102-110 of the wireless mesh radio network 100 for determining a data routing through the network 100. Furthermore, other information providing constraint parameters for a motion path of the user equipment 101 may be considered and combined with the location and velocity of the user equipment 101 and the other nodes 102-110 to plan the data routing through the wireless mesh radio network 100. These constraint parameters may comprise for example physical barriers which cannot be passed by a node or the fact that a node stays on roads and/or walkways.

## Claims

1. A method for operating a user equipment in a wireless mesh radio network, the wireless mesh radio network (100) comprising at least two nodes (102-104) for routing communication data, wherein the user equipment (101) is configured to communicate directly with each of the at least two nodes (102-104) via a corresponding direct radio communication, the method comprising:
- determining for each node of the at least two nodes (102-104) a corresponding movement information which depends on a movement of at least one of the user equipment (101) and the node (102-104),
- selecting one node (104) of the at least two nodes (102-104) based on the determined movement information of each of the at least two nodes (102-104), and
- transmitting communication data to be routed from the user equipment (101) to a destination (110) directly to the selected node (104).

2. The method according to claim 1, wherein determining for each node (102-104) the corresponding movement information comprises for each node (102-104):
- determining a position and velocity of the user equipment (101),
- determining a position of the node (102-104), and
- determining the movement information based on the position and velocity of the user equipment (101) and the position of the node (102-104).

3. The method according to claim 1 or claim 2, wherein determining for each node (102-104) the corresponding movement information comprises for each node (102-104):
- determining a relative velocity between the user equipment (101) and the node (102-104).

4. The method according to claim 3, wherein determining the relative velocity between the user equipment (101) and the node (102-104) comprises:
- measuring a series of signal strengths of radio signals transmitted between the user equipment (101) and the node (102-104), and
- determining the relative velocity between the user equipment (101) and the node (102-104) based on the series of signal strengths.

5. The method according to any one of the preceding claims, wherein determining for each node (102-104) the corresponding movement information comprises:
- determining a predicted motion path (207) of the user equipment (101), and
- determining the movement information based on the predicted motion path (207) of the user equipment (101).

6. The method according to any one of the preceding claims, wherein determining for each node (102-104) the corresponding movement information comprises for at least one of the nodes (102-104):
- determining a predicted motion path of the node (102-104), and
- determining the movement information based on the predicted motion path of the node (102-104).

7. A user equipment for a wireless mesh radio network, the wireless mesh radio network (100) comprising at least two nodes (102-104) for routing communication data, the user equipment (101) comprising:
- a wireless radio interface (201) for communicating wirelessly with the at least two nodes (102-104) via corresponding direct radio communications, and
- a processing device (202), configured
to determine for each node of the at least two nodes (102-104) a corresponding movement information which depends on a movement of at least one of the user equipment (101) and the node (102-104),
to select one node (104) of the at least two nodes (102-104) based on the determined movement information of each of the at least two nodes (102-104), and
to transmit communication data to be routed from the user equipment (101) to a destination (110) directly to the selected node (104).

8. The user equipment according to claim 7, further comprising:
- a sensor device (203) configured to determine a position and velocity of the user equipment (101),
wherein the processing device (202) is configured
to receive for each node (102-104) a corresponding position information relating to a position of the node (102-104), and
to determine the movement information based on the position and velocity of the user equipment (101) and the position of the node (102-104).

9. The user equipment according to claim 7 or claim 8, wherein the processing device (202) is configured to determine for each node (102-104) a relative velocity between the user equipment (101) and the node (102-104).

10. The user equipment according to claim 9, wherein the processing device (202) is configured
to measure for each node (102-104) a series of signal strengths of radio signals transmitted between the user equipment (101) and the node (102-104), and
to determine for each node (102-104) the relative velocity between the user equipment (101) and the node (102-104) based on the series of signal strengths.

11. The user equipment according to any one of claims 7-10, wherein the processing device (202) is configured
to determine a predicted motion path (207) of the user equipment (101), and
to determine the movement information based on the predicted motion path (207) of the user equipment (101).

12. The user equipment according to any one of claims 7-11, wherein the processing device (202) is configured
to receive from each node (102-104) a predicted motion path of the node (102-104), and
to determining for each node (102-104) the movement information based on the predicted motion path of the node (102-104).

13. A node for a wireless mesh radio network, the wireless mesh radio network (100) comprising a plurality of nodes (102-104) for routing communication data, the node (102-104) comprising:
- a wireless radio interface (201) for communicating wirelessly with a user equipment (101) via a direct radio communication, and
- a processing device (220), configured
to determine at least one of a position information relating to a position of the node (102-104) and a velocity information relating to a velocity of the node (102-104), and
to transmit at least one of the position information and the velocity information to the user equipment (101) via the direct radio communication.

14. A node for a wireless mesh radio network, the wireless mesh radio network (100) comprising a plurality of nodes (102-104) for routing communication data, the node (102-104) comprising:
- a wireless radio interface (201) for communicating wirelessly with a user equipment (101) via a direct radio communication, and
- a processing device (202), configured
to determine a predicted motion path of the node (102-104), and
to transmit the predicted motion path of the node (102-104) to the user equipment (101) via the direct radio communication.

15. The node according to claim 13 claim or 14, comprising the user equipment (101) according to any one of claims 7-12.
